# EUROPEAN PATENT SPECIFICATION

(11) **EP 1 462 015 B1**
(45) Date of publication and mention of the grant of the patent: **13.05.2009**
(21) Application number: 04425194.0
(22) Date of filing: 19.03.2004
(51) Int. Cl.: A24C 5/00, A24B 3/04

(54) **A system for manufacturing tobacco products and a procedure for transferring heat between two or more stations of such a system**
System zur Herstellung von Tabakprodukten und Verfahren zur Übertragung von Wärme zwischen zwei oder mehreren Stationen eines solchen Systems
Système de fabrication de produits du tabac et procédé de transfert de chaleur entre deux stations ou plus d'un tel système

(30) Priority: 25.03.2003 IT BO20030164
(43) Date of publication of application: 29.09.2004
(73) Proprietor: G.D S.p.A., 40133 Bologna (IT)
(72) Inventor: Draghetti, Fiorenzo, 40059 Medicina (Bologna) (IT); Dall'Osso, Davide, 40141 Bologna (IT)
(74) Representative: Lanzoni, Luciano

(56) References cited:
- WO-A-01/84970
- US-A- 3 844 199
- US-A- 5 462 071

## Description

The present invention relates to a system for manufacturing tobacco products as described in the prior art section of claim 1.

In addition, the invention relates to a procedure for transferring heat between two or more stations of a system for manufacturing tobacco products, as described in the prior art section of claim 12.

The term "station" is utilized in the course of the specification to describe a group of machines by which cigarettes are made and packed, also a group of machines and devices by which tobacco is processed.

The invention relates to the art field of tobacco products and in particular to the manufacture of cigarettes, also of cigarette packets and cartons and/or related products.

Conventionally, the manufacture of cigarettes and other such tobacco products involves the use of various different machines operating in conjunction one with another in such a way that a raw material, typically leaf tobacco cured and compressed to form bulk units of convenient size for storage purposes, can be transformed into a succession of tobacco products such as cigarettes and the like, wrapped in packets and cartons for subsequent distribution and sale.

Generally speaking, systems of conventional type for manufacturing and packaging tobacco products comprise two processing stations needed in order to bring about the aforementioned transformation of raw forming material into tobacco products. A first station, or primary processing station, generally comprises machinery and/or devices needed in order to convert the raw forming material into a treated forming material suitable for used in the steps of assembling and shaping the aforementioned tobacco products. A second or cigarette making and packing station, which performs the manufacturing steps proper, is equipped with machinery and/or devices operating directly on the treated forming material supplied by the primary processing station, first fashioning the tobacco products with the selfsame material and then wrapping the products in packets.

The raw forming material undergoes one or more treatments in the primary processing station that depend on a constant input of heat and moisture. This heating and humidifying process, referred to also as conditioning, consists in maintaining the environment around the primary processing station, or in practice the building enclosure in which the station is installed, at a predetermined constant temperature suitable for the primary treatments being carried out.

Normally, the temperature level in the primary processing station is maintained by one or more specially designed heating devices installed in the selfsame station.

Conversely, the manufacturing station houses a notable quantity of machinery and/or devices with numerous moving parts, as well as parts liable to overheat, which means that the station itself heats up considerably during manufacture, and this can jeopardize the quality of the products in process. Consequently, the manufacturing station will as a rule be air-conditioned to ensure a suitable mean temperature.

In order to cool the machines and/or devices subject to overheating, the manufacturing station is also equipped with a suitable closed-circuit cooling system. More exactly, the cooling system comprises a chiller unit connected to a fluodynamic circuit extending around the manufacturing station, of which the various branches are incorporated together with suitable heat-exchange devices into the respective machines and/or devices that require cooling. Thus, a liquid cooled by the chiller unit and circulating in the fluodynamic circuit is used to lower the temperature of the machinery and/or devices in operation, whilst the temperature of the liquid is raised as a result of the heat exchange. The liquid is returned to the chiller unit, cooled, and recirculated to continue cooling the machines and/or devices in such a way that these are kept at a temperature no higher than a prescribed limit.

An example of such cooling device can be seen in document WO 01/84970. This publication relates to a liquid cooling system for machine components of production machines of the tobacco-processing industry. The inventive cooling system is configured as a closed system and is divided up into at least two liquid cycles, thereby allowing the liquid cycles to be adapted to one another in such a manner that the consumers are matched in terms of temperature and capacity.

It has been found that conventional systems in widespread use for manufacturing tobacco products, while able to meet the typical needs of cigarette manufacturers in terms of output, are nonetheless not without certain drawbacks concerned mainly with the high energy consumption that accompanies the use of cooling systems serving the manufacturing station, and heating systems serving the primary processing station where the raw forming material is prepared, also the costs of making the tobacco products and by extension the cost of marketing, attributable both to the aforementioned energy consumption and to the high maintenance expenditure generated by the heating and cooling systems.

The object of the present invention is therefore to overcome the problems associated with the prior art by setting forth a system for manufacturing tobacco products and a procedure for transferring heat between two or more stations of such a system, such as will achieve a considerable reduction in energy consumption and significantly cut the costs of producing and marketing the tobacco products in question.

The stated object and others, which will become clearer in the course of the specification that follows, are substantially realized in a system for manufacturing tobacco products as identifiable from the characterizing portion of claim 1.

The stated object is realized additionally in a procedure for transferring heat between two or more stations of a system for manufacturing tobacco products, comprising the step as recited in the characterizing portion of claim 13.

The invention will now be described in detail, by way of example, with the aid of the accompanying drawings, in which:
- figure 1 illustrates a system for the manufacture of tobacco products, represented schematically and in perspective;

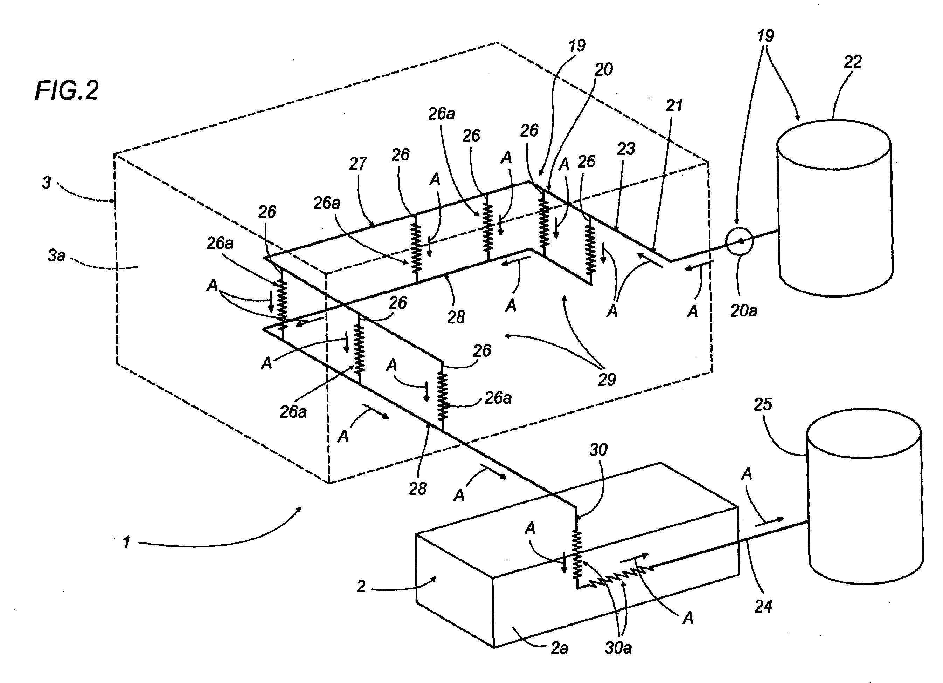

- figure 2 provides a schematic representation of a fluodynamic circuit forming part of a heat exchange device associated with the system of figure 1;
- figure 3 is a further schematic representation of the system as in figure 1, shown in an alternative embodiment.

Referring to the accompanying drawings, 1 denotes a system for the manufacture of tobacco products, such as cigarettes, cigars and the like, comprising at least one primary processing station 2 in which at least one raw forming material (not indicated), namely cured tobacco compacted previously into bulk units of substantially parallelepiped appearance, undergoes one or more conditioning treatments such as will render it suitable for use in manufacturing the aforementioned tobacco products.

More exactly, the primary processing station 2 comprises items of machinery and/or devices (not illustrated, being conventional in embodiment) by which the bulk units of raw forming material are broken up into a plurality of small portions; these smaller pieces are then conveyed to a conditioning area where the raw material is exposed to steady conditions of heat and humidity, and moistened thus to the point of assuming the characteristics that will render it suitable as a filler material for the tobacco products. Given therefore that the primary processing station 2 is an environment in which temperature and humidity are closely linked to constant and predetermined values, calculated so that changes will be induced in the raw material according to prescribed parameters, the physical conditions in the environment must be such as to assure the quality of the treated forming material destined to undergo successive manufacturing steps. To this end, the primary processing station is set up internally of a special structure 2a, isolated hermetically from the external environment, so as to create an enclosure inside which the operation of maintaining the physical conditions needed for preparation of the raw forming material is favoured by the creation of the hermetic barrier.

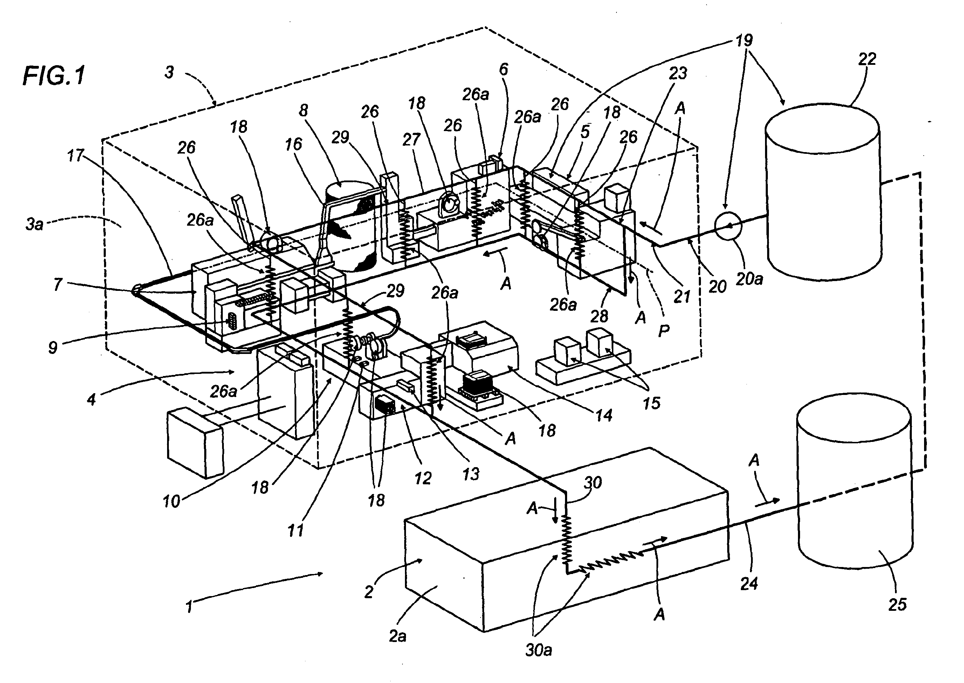

Still with reference to figure 1, the system 1 comprises at least one manufacturing station 3 incorporating machines and/or devices 4 by which treated material prepared in the primary processing station 2 is processed further. More particularly, the machines and/or devices 4 of the manufacturing station 3 are designed to transform the treated material into a plurality of tobacco products, such as cigarettes.

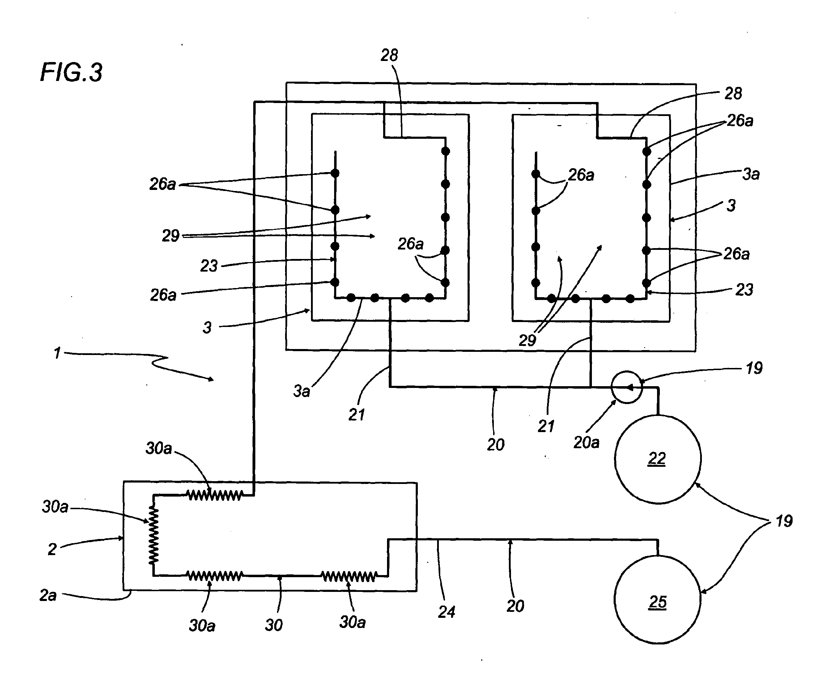

As illustrated in figure 3, the system 1 could include two or more stations 3, equipped with respective cigarette making and packing lines by which treated forming material received from the primary processing station 2 is transformed into a plurality of tobacco products.

Each manufacturing station 3 preferably comprises a building or shop 3a isolated from the surrounding environment and housing, by way of example, albeit implying no limitation, a cigarette maker 5 and a filter tip attachment 6, also a cigarette packer 7 connected to the filter tip attachment 6 by way of a temporary storage unit or buffer 8, turning out packets 9 of cigarettes. The packer 7 can also be connected to a cellophaner 10 by which overwrapped packets 11 are directed toward a cartoner 13, from where cartons 13 are conveyed to a case filler or parceller 14 and put into cases 15 at the outfeed stage of the manufacturing station 3. The machines and/or devices 4 of the manufacturing station 3 are interconnected along a predetermined production line P by means of conveyor devices denoted 16 and 17, of which the conveyor 16 linking the filter tip attachment 6 and the packer 7, and the conveyor 17 linking the packer 7 and the cellophaner 10, in particular, are indicated in figure 1.

In addition, each machine or device 4 operates utilizing respective wrapping materials fed from rolls and/or stacks, consisting of paper, metal foil, cellophane, diecut cardboard blanks and other such packaging media, all of which denoted 18, as well as additional or auxiliary materials, namely coupons and revenue stamps (not illustrated).

Given the sizeable presence of machinery and/or devices 4 with significant numbers of moving parts and/or components tending to overheat, for example mechanical elements set in motion and operating in conditions of appreciable friction, or electrical and/or electromechanical components operating with high levels of current flowing through the relative circuits, the temperature rises markedly within the manufacturing station and this can adversely affect the physical and chemical properties of the treated forming material being processed. Moreover, it has been found that in certain of the areas liable to overheat, the resulting risk of degradation to the treated material increases markedly, jeopardizing the entire manufacturing process.

Advantageously, to the end of cooling the various parts and/or elements of the machines or devices 4 subject to overheating, the system 1 comprises at least one heat exchange device 19 associated with the manufacturing station 3 and serving to cool the aforementioned parts and elements with the aid of a heat exchange fluid (not illustrated) circulated through a suitable fluodynamic circuit 20 extending at least partly around the station 3.

As discernible from the drawings, the fluodynamic circuit 20 will be embodied preferably as an open circuit equipped with suitable driving and pumping means 20a able to ensure a continuous circulation of the heat exchange fluid through the fluodynamic circuit, following a predetermined flow path A.

In detail, the fluodynamic circuit 20 comprises at least one feed pipeline 21 connectable to a source 22 of heat exchange fluid located externally of the primary processing station 2, where the raw forming material is conditioned, and the station 3 in which the tobacco products are made and packed. The fluodynamic circuit 20 further comprises a first heat exchange pipeline 23 connected to the end of the feed pipeline 21 opposite from the end connected to the source 22 of fluid, and extending at least partly around the manufacturing station 3. The circuit 20 also includes at least one discharge pipeline 24 connecting on the one hand with the feed pipeline 21 by way of the first heat exchange pipeline 23 and connectable on the other hand to a discharge station 25 positioned preferably, as in the case of the fluid source 22, externally of the primary processing station 2 and the manufacturing station 3 of the system 1.

More exactly, the first heat exchange pipeline 23 of the fluodynamic circuit 20 comprises at least one branch 26 engaging a heat-generating machine and/or device 4 of the manufacturing station 3 in such a way that the item of equipment in question is cooled by the heat exchange fluid circulated from the source 22.

In the example of the accompanying drawings, the first heat exchange pipeline 23 comprises a main flow line 27 routed internally of the manufacturing station 3 and representing a continuation of the feed pipeline 21. The main flow line 27 presents a plurality of branches 26, each designed to engage a respective heat-generating machine or other type of device 4 installed in the manufacturing station 3. The first heat exchange pipeline 23 also includes a secondary flow line 28 connecting the plurality of branches 26 to the aforementioned discharge line 24 of the fluodynamic circuit 20, so that the fluid from the source 22 passes first into the main flow line 27, occupying the branches 26 as a result, then through the secondary line 28 and ultimately out toward the discharge line 24. In effect, the secondary flow line 28 of the first heat exchange pipeline 23 is connected to the ends of the single branches 26 opposite to the ends connected to the main flow line 27, thus combining with this same line and with the branches to establish a cooling network deployed internally of the manufacturing station 3.

As discernible from the accompanying drawings, each single branch 26 of the first heat exchange pipeline 23 is equipped preferably with at least one heat exchanger 26a applicable to the portion or element of a relative machine or device 4 liable to overheat. Naturally enough, the heat exchangers 26a will be conceived and designed so as to favour the most effective heat exchange possible between the hot part and the coolant fluid; consequently, these same parts of the machines or devices 4 are cooled by the fluid as it flows through the branches 26, whilst the fluid in turn picks up heat during its passage through the circuit 20.

In order to exploit the heat accumulated by the coolant fluid leaving the manufacturing station 3, the fluodynamic circuit 20 of the heat exchange device 19 also comprises a second heat exchange pipeline 30 extending at least partly through the primary processing station 2 where the raw forming material is conditioned.

More exactly, the second heat exchange pipeline 30 extends from the secondary flow line 28 of the first heat exchange pipeline 23 to the discharge pipeline 24, so that liquid heated by and leaving the manufacturing station 3 can be utilized to heat the primary processing station 2. Advantageously, the second heat exchange pipeline 30 might also be equipped, similarly to the first, with one or more heat exchangers 30a designed especially to maintain an optimum temperature for the treatments carried out in the primary station 2

In a preferred embodiment, the source 22 and the discharge station 25 will be artificial and, as illustrated in the accompanying drawings, separate from one another. The elements in question might connect respectively, for example, with the water supply main serving the manufacturing station 3 and with the main drain serving the primary processing station 2.

The operation of the heat exchange device 19, described thus far essentially in structural terms, is as follows.

Fluid is drawn by the device 19 from the supply source 22, through the agency of the drive or pump means 20a, and directed via the feed pipeline 21 into the first heat exchange pipeline 23. Entering this first pipeline 23, the heat exchange fluid passes along the main flow line 27 and into the various branches 26, filling the respective heat exchangers 26a. During its passage through the heat exchangers 26a, the fluid will cool the respective machines and/or devices 4 and acquire heat in the process. The heated fluid thereupon passes through the secondary flow line 28 and into the second heat exchange pipeline 30 internally of which, and in conjunction with the relative heat exchangers 30a, it helps to maintain the temperature in the primary processing station 2 within predetermined values for carrying out the humidifying and moisturizing treatments applied to the raw forming material. Finally the heat exchange fluid passes along the remaining length of the discharge pipeline 24 and into the discharge station 25.

The objects stated at the outset are realized by the present invention, and the drawbacks mentioned in the preamble duly overcome.

First and foremost, a system 1 for manufacturing tobacco products according to the present invention delivers production of optimum quality, and with no degradation of the forming material.

In addition, when equipped with the heat exchange device 19 described in the foregoing specification, the system 1 is able to cool the machines and/or devices 4 of the manufacturing station 3 without using complex and costly chilling equipment, and to heat the primary processing station 2, keeping the internal temperature at a constant value without the use of special heating equipment. Dispensing with chilling and heating equipment has the effect of lowering overall production costs significantly, and this in turn appreciably reduces the cost of marketing the finished products.

## Claims

1. A system for manufacturing tobacco products, comprising:
- at least one manufacturing station (3) supplied with at least one forming material used to make the tobacco products, designed to fashion a plurality of marketable and saleable tobacco products composed at least in part of the forming material;
- at least one heat exchange device (19) actively associated with the manufacturing station (3) in such a way as to cool the station (3) by means of at least one heat exchange fluid circulated within a fluodynamic circuit (20) extending at least in part through the selfsame manufacturing station,
wherein the fluodynamic circuit (20) of the heat exchange device (19) is an open circuit comprising at least one feed pipeline (21) connectable to a source (22) from which the heat exchange fluid is supplied, at least one discharge pipeline (24) connecting on one hand with the feed pipeline (21) and connectable besides to at least one discharge station (25) to which the heat exchange fluid is released ultimately from the circuit (20), also a first heat exchange pipeline (23) connected to the feed pipeline (21) and to the discharge pipeline (24) and extending at least partly through the manufacturing station (3); said system being **characterized in that** it further comprises a primary processing station (2) actively associated with the manufacturing station (3), by which the manufacturing station (3) is supplied with forming material suitable for transformation into tobacco products, wherein the forming material is subjected while in the primary processing station (2) to one or more treatments requiring a constant input of heat, and the heat exchange device (19) interfaces with the primary processing station (2) in such a way as to heat the selfsame station and maintain it at a predetermined temperature.

2. A system as in claim 1, of which the manufacturing station (3) comprises a plurality of machines (4) combining in operation one with another to turn out tobacco products, wherein the first heat exchange pipeline (23) presents at least one branch (26) engaging at least one heat-generating machine (4) of the plurality.

3. A system as in claim 2, wherein the first heat exchange pipeline (23) incorporates: a main flow line (27) extending between the feed pipeline (21) and the discharge pipeline (24); a plurality of branches (26) each engaging a respective machine (4) or other device of the manufacturing station (3) liable to generate heat; a secondary flow line (28) extending between the feed pipeline (21) and the discharge pipeline (24), and connected to the end of each branch (26) opposite to the end connected to the main flow line (27) in such a way as to combine with this same line (27) and with the branches (26) in establishing a cooling network (29).

4. A system as in claim 3, wherein each branch (26) of the first heat exchange pipeline (23) comprises at least one heat exchanger (26a) such as can be associated with a respective machine (4) or device in need of cooling.

5. A system as in claims 1 to 4, wherein the entire manufacturing station (3) is housed internally of a structure (3a) isolated hermetically from the external environment and air-conditioned by a climate control device forming part of the system (1) .

6. A system as in claims 1 to 5, wherein the source (22) of heat exchange fluid is located externally of the manufacturing station (3).

7. A system as in claims 1 to 6, wherein the discharge station (25) in receipt of heat exchange fluid leaving the circuit is located externally of the manufacturing station (3).

8. A system as in claims 6 and 7, wherein the source (22) of fluid and the discharge station (25) are artificial.

9. A system as in claims 1 to 8, wherein the heat exchange device (19) comprises a second heat exchange pipeline (30) extending at least in part through the primary processing station (2), connecting with the first heat exchange pipeline (23) on the one hand and the discharge pipeline (24) on the other, in such a way that the heat exchange fluid heated by and leaving the manufacturing station (3) can be used to heat the primary processing station (2).

10. A system as in claim 9 wherein the primary processing station (2) is isolated hermetically from the surrounding environment.

11. A system as in claim 10 wherein the second heat exchange pipeline (30) comprises at least one heat exchanger (30a) located internally of the primary processing station (2).

12. A procedure for transferring heat between two or more stations of a system for manufacturing tobacco products, comprising the steps of:
- cooling a manufacturing station (3) by circulating at least one heat exchange fluid procured from a source (22) located externally of the station;
- directing the heat exchange fluid from the cooled manufacturing station (3) to a station (2) for the primary processing of at least one raw forming material, in order to heat the primary processing station.

13. A procedure as in claim 12, wherein the step of cooling the manufacturing station (3) includes the step of cooling a plurality of machines (4) and/or devices operating internally of the station (3) and generating heat.

14. A procedure as in claim 13, wherein the step of cooling the machines (4) and/or devices in the manufacturing station (3) involves cooling all the machines (4) and/or devices simultaneously.

15. A procedure as in claims 12 to 14, wherein the step of heating the primary processing station (2) is followed by a step of releasing the heat exchange fluid to an external discharge station (25).

16. A procedure as in claims 12 to 15, wherein the step of cooling the manufacturing station (3) consists in a continuous process accomplished by circulating the heat exchange fluid drawn continuously from the source (22) of supply.

17. A procedure as in claims 12 to 16, wherein the step of heating the primary processing station (2) is brought about continuously by directing the heat exchange fluid into the selfsame station (2) after being heated in the manufacturing station (3).

## Patentansprüche

1. System zur Herstellung von Tabakprodukten, bestehend aus:
- mindestens einer Herstellungsstation (3), die mit mindestens einem Fertigungsmaterial zur Herstellung der Tabakprodukte versorgt wird und dafür ausgelegt ist, mehrere markt- und verkaufsfähige Tabakprodukte herzustellen, die zumindest teilweise aus dem Fertigungsmaterial bestehen;
- mindestens einer Wärmetauschvorrichtung (19), die mit der Herstellungsstation (3) derart wirkverbunden ist, dass sie die Station (3) mit Hilfe mindestens eines Wärmetauscherfluids kühlt, das innerhalb eines fluiddynamischen Kreislaufs (20) zirkuliert, der sich zumindest teilweise durch die genannte Herstellungsstation erstreckt,
worin der fluiddynamische Kreislauf (20) der Wärmetauschvorrichtung (19) ein offener Kreislauf ist, der Folgendes beinhaltet: mindestens eine Zufuhrleitung (21), die an eine Quelle (22) angeschlossen werden kann, von der das Wärmetauscherfluid zugeführt wird, mindestens eine Ausgabeleitung (24), die auf einer Seite mit der Zufuhrleitung (21) verbunden ist und außerdem an mindestens eine Ausgabestation (25) angeschlossen werden kann, an die das Wärmetauscherfluid schließlich von dem Kreislauf (20) ausgegeben wird, sowie eine erste Wärmetauschleitung (23), die mit der Zufuhrleitung (21) und der Ausgabeleitung (24) verbunden ist und sich zumindest teilweise durch die Herstellungsstation (3) erstreckt; wobei das genannte System **dadurch gekennzeichnet ist, dass** es ferner eine primäre Aufbereitungsstation (2) beinhaltet, die mit der Herstellungsstation (3) wirkverbunden ist und welche die Herstellungsstation (3) mit dem geeigneten Fertigungsmaterial zur Umwandlung in Tabakprodukte versorgt, worin das Fertigungsmaterial, während es sich in der primären Aufbereitungsstation (2) befindet, einer oder mehreren Behandlungen unterzogen wird, die eine konstante Wärmezufuhr erfordern, und worin die Wärmetauschvorrichtung (19) mit der primären Aufbereitungsstation (2) derart in Verbindung steht, dass sie die Station aufheizt und auf einer vorbestimmten Temperatur hält.

2. System nach Anspruch 1, bei dem die Herstellungsstation (3) mehrere Maschinen (4) beinhaltet, die miteinander zusammenwirken, um Tabakprodukte zu erzeugen, worin die erste Wärmetauschleitung (23) mindestens einen Zweig (26) beinhaltet, der zumindest in Eingriff mit einer dieser mehreren wärmeerzeugenden Maschinen (4) steht.

3. System nach Anspruch 2, worin die erste Wärmetauschleitung (23) Folgendes umfasst: eine Hauptleitung (27), die sich zwischen der Zufuhrleitung (21) und der Ausgabeleitung (24) erstreckt; mehrere Abzweigungen (26), die jeweils in Eingriff mit einer entsprechenden wärmeerzeugenden Maschine (4) oder einer anderen wärmeerzeugenden Vorrichtung der Herstellungsstation (3) stehen; eine sekundäre Leitung (28), die sich zwischen der Zufuhrleitung (21) und der Ausgabeleitung (24) erstreckt und mit dem Ende jeder Abzweigung (26) verbunden ist, das gegenüber dem mit der Hauptleitung (27) verbundenen Ende liegt, um zusammen mit dieser Leitung (27) und mit den Abzweigungen (26) ein Kühlungsnetzwerk (29) zu bilden.

4. System nach Anspruch 3, worin jede Abzweigung (26) der ersten Wärmetauschleitung (23) mindestens einen Wärmetauscher (26a) beinhaltet, der einer entsprechenden zu kühlenden Maschine (4) oder Vorrichtung zugeordnet werden kann.

5. System nach den Ansprüchen 1 bis 4; worin die gesamte Herstellungsstation (3) im Innern einer Struktur (3a) untergebracht ist, die hermetisch von der Außenumgebung isoliert ist und durch ein Klimagerät klimatisiert wird, das Bestandteil des Systems (1) ist.

6. System nach den Ansprüchen 1 bis 5, worin die Quelle (22) des Wärmetauscherfluids außerhalb der Herstellungsstation (3) angeordnet ist.

7. System nach den Ansprüchen 1 bis 6, worin die Ausgabestation (25), zu der das den Kreislauf verlassende Wärmetauscherfluid geleitet wird, außerhalb der Herstellungsstation (3) angeordnet ist.

8. System nach den Ansprüchen 6 und 7, worin die Quelle (22) des Fluids und die Ausgabestation (25) künstlich sind.

9. System nach den Ansprüchen 1 bis 8, worin die Wärmetauschvorrichtung (19) eine zweite Wärmetauschleitung (30) beinhaltet, die sich zumindest teilweise durch die primäre Aufbereitungsstation (2) erstreckt und die einerseits mit der ersten Wärmetauschleitung (23) und andererseits mit der Ausgabeleitung (24) derart verbunden ist, dass das von der Herstellungsstation (3) aufgeheizte und aus dieser austretende Wärmetauscherfluid zur Aufheizung der primären Aufbereitungsstation (2) verwendet werden kann.

10. System nach Anspruch 9, worin die primäre Aufbereitungsstation (2) hermetisch von der Außenumgebung isoliert ist.

11. System nach Anspruch 10, worin die zweite Wärmetauschleitung (30) mindestens einen Wärmetauscher (30a) beinhaltet, der im Innern der primären Aufbereitungsstation (2) angeordnet ist.

12. Verfahren zur Übertragung von Wärme zwischen zwei oder mehreren Stationen eines Systems zur Herstellung von Tabakprodukten, das folgende Schritte beinhaltet:
- Kühlen einer Herstellungsstation (3) durch Umlauf mindestens eines Wärmetauscherfluids, das von einer Quelle (22) bereitgestellt wird, die außerhalb der Station angeordnet ist;
- Leiten des Wärmetauscherfluids von der gekühlten Herstellungsstation (3) zu einer Station (2) für die primäre Aufbereitung mindestens eines rohen Fertigungsmaterials, um die primäre Aufbereitungsstation aufzuheizen.

13. Verfahren nach Anspruch 12, worin der Schritt des Kühlens der Herstellungsstation (3) den Schritt des Kühlens mehrerer Maschinen (4) und/oder Vorrichtungen beinhaltet, die innerhalb der Station (3) arbeiten und Wärme erzeugen.

14. Verfahren nach Anspruch 13, worin der Schritt des Kühlens der Maschinen (4) und/oder Vorrichtungen in der Herstellungsstation (3) das gleichzeitige Kühlen aller Maschinen (4) und/oder Vorrichtungen umfasst.

15. Verfahren nach den Ansprüchen 12 bis 14, worin auf den Schritt des Aufheizens der primären Aufbereitungsstation (2) ein Schritt der Ausgabe des Wärmetauscherfluids an eine externe Ausgabestation (25) folgt.

16. Verfahren nach den Ansprüchen 12 bis 15, worin der Schritt des Kühlens der Herstellungsstation (3) aus einem kontinuierlichen Prozess besteht, der darin besteht, dass das kontinuierlich von der Versorgungsquelle (22) entnommene Wärmetauscherfluid in Umlauf versetzt wird.

17. Verfahren nach den Ansprüchen 12 bis 16, worin der Schritt des Aufheizens der primären Aufbereitungsstation (2) kontinuierlich **dadurch** erfolgt, dass das Wärmetauscherfluid in die betreffende Station (2) geleitet wird, nachdem es in der Herstellungsstation (3) aufgeheizt wurde.

## Revendications

1. Un système de fabrication de produits du tabac, comprenant :
- au moins une station de fabrication (3) alimentée avec au moins un matériau de formation utilisé pour réaliser les produits du tabac, et destinée à réaliser une pluralité de produits du tabac commercialisables et vendables composés, au moins en partie, dudit matériau de formation ;
- au moins un dispositif d'échange de chaleur (19) activement associé à la station de fabrication (3) de manière à refroidir ladite station (3) par l'intermédiaire d'au moins un fluide d'échange de chaleur circulant dans un circuit fluidodynamique (20) se développant, au moins en partie, à travers cette même station de fabrication, où le circuit fluidodynamique (20) du dispositif d'échange de chaleur (19) est un circuit ouvert comprenant au moins un conduit d'alimentation (21) pouvant être raccordé à une source (22) servant à alimenter le fluide d'échange de chaleur, au moins un conduit d'évacuation (24) raccordé d'un côté au conduit d'alimentation (21) et pouvant en outre être raccordé à au moins une station d'évacuation (25) où le fluide d'échange de chaleur est finalement rejeté du circuit (20), ainsi qu'un premier conduit d'échange de chaleur (23) raccordé au conduit d'alimentation (21) et au conduit d'évacuation (24) et se développant au moins en partie à travers la station de fabrication (3) ; ledit système étant **caractérisé en ce qu'**il comprend en outre une station de traitement primaire (2) activement associée à la station de fabrication (3) et destinée à alimenter ladite station de fabrication (3) avec du matériau de formation adapté à être transformé en produits du tabac, où le matériau de formation est soumis, pendant son séjour dans la station de traitement primaire (2), à un ou plusieurs traitements nécessitant un apport de chaleur constant, et où le dispositif d'échange de chaleur (19) sert d'interface avec la station de traitement primaire (2) afin de chauffer cette même station et de la maintenir à une température prédéfinie.

2. Le système selon la revendication 1, dont la station de fabrication (3) comprend une pluralité de machines (4) qui coopèrent entre elles pour fabriquer les produits du tabac, **caractérisé en ce que** le premier conduit d'échange de chaleur (23) présente au moins une branche (26) engageant au moins une machine (4) génératrice de chaleur de ladite pluralité.

3. Le système selon la revendication 2, **caractérisé en ce que** le premier conduit d'échange de chaleur (23) incorpore : une ligne d'écoulement principale (27) s'étendant entre le conduit d'alimentation (21) et le conduit d'évacuation (24) ; une pluralité de branches (26) engageant chacune une machine (4) respective ou un autre dispositif de la station de fabrication (3) pouvant générer de la chaleur ; une ligne d'écoulement secondaire (28) s'étendant entre le conduit d'alimentation (21) et le conduit d'évacuation (24), et raccordée à l'extrémité de chaque branche (26) opposée à l'extrémité raccordée à la ligne d'écoulement principale (27), de manière à se combiner avec cette même ligne (27) et avec les branches (26) pour former un réseau de refroidissement (29).

4. Le système selon la revendication 3, **caractérisé en ce que** chaque branche (26) du premier conduit d'échange de chaleur (23) comprend au moins un échangeur de chaleur (26a) qui peut être associé à une machine (4) respective ou à un autre dispositif devant être refroidi.

5. Le système selon les revendications de 1 à 4, **caractérisé en ce que** toute la station de fabrication (3) est logée à l'intérieur d'une structure (3a) hermétiquement isolée de l'environnement extérieur et climatisée par un dispositif de conditionnement d'air faisant partie du système (1).

6. Le système selon les revendications de 1 à 5, **caractérisé en ce que** la source (22) de fluide d'échange de chaleur est située à l'extérieur de la station de fabrication (3).

7. Le système selon les revendications de 1 à 6, **caractérisé en ce que** la station d'évacuation (25) qui reçoit le fluide d'échange de chaleur en sortie du circuit est située à l'extérieur de la station de fabrication (3).

8. Le système selon les revendications 6 et 7, **caractérisé en ce que** la source (22) de fluide et la station d'évacuation (25) sont artificielles.

9. Le système selon les revendications de 1 à 8, **caractérisé en ce que** le dispositif d'échange de chaleur (19) comprend un deuxième conduit d'échange de chaleur (30) se développant au moins en partie à travers la station de traitement primaire (2), raccordé d'un côté avec le premier conduit d'échange de chaleur (23) et de l'autre avec le conduit d'évacuation (24), de manière à ce que le fluide d'échange de chaleur chauffé par et quittant la station de fabrication (3) puisse être utilisé pour chauffer la station de traitement primaire (2) .

10. Le système selon la revendication 9, **caractérisé en ce que** la station de traitement primaire (2) est hermétiquement isolée du milieu environnant.

11. Le système selon la revendication 10, **caractérisé en ce que** le deuxième conduit d'échange de chaleur (30) comprend au moins un échangeur de chaleur (30a) situé à l'intérieur de la station de traitement primaire (2).

12. Un procédé de transfert de chaleur entre deux stations ou plus d'un système de fabrication de produits du tabac, **caractérisé en ce qu'**il comprend les phases consistant à :
- refroidir une station de fabrication (3) par circulation d'au moins un fluide d'échange de chaleur provenant d'une source (22) située à l'extérieur de ladite station ;
- véhiculer le fluide d'échange de chaleur de la station de fabrication (3) refroidie à une station (2) servant au traitement primaire d'au moins un matériau brut de formation, afin de chauffer ladite station de traitement primaire.

13. Le procédé selon la revendication 12, **caractérisé en ce que** la phase de refroidissement de la station de fabrication (3) comprend la phase de refroidissement d'une pluralité de machines (4) et/ou de dispositifs opérant à l'intérieur de ladite station (3) et générant de la chaleur.

14. Le procédé selon la revendication 13, **caractérisé en ce que** la phase de refroidissement des machines (4) et/ou des dispositifs situés dans la station de fabrication (3) prévoit le refroidissement simultané de l'ensemble des machines (4) et/ou dispositifs.

15. Le procédé selon les revendications de 12 à 14, **caractérisé en ce que** la phase de chauffage de la station de traitement primaire (2) est suivie d'une phase de rejet du fluide d'échange de chaleur dans une station d'évacuation (25) extérieure.

16. Le procédé selon les revendications de 12 à 15, **caractérisé en ce que** la phase de refroidissement de la station de fabrication (3) est un processus continu qui prévoit la circulation du fluide d'échange de chaleur prélevé en continu de la source (22) d'alimentation.

17. Le procédé selon les revendications de 12 à 16, **caractérisé en ce que** la phase de chauffage de la station de traitement primaire (2) est exécutée en continu en véhiculant le fluide d'échange de chaleur, préalablement chauffé dans la station de fabrication (3), dans cette même station (2).
